# EUROPEAN PATENT APPLICATION

(11) **EP 4 745 754 A1**
(43) Date of publication of application: **20.05.2026**
(21) Application number: 25213660.1
(22) Date of filing: 05.11.2025
(51) Int. Cl.: G06F 7/544, G06F 7/50, G06F 7/52, G06F 7/533, G06F 7/60

(54) **ENERGY-EFFICIENT MULTIPLIER-ACCUMULATOR**

(30) Priority: 14.11.2024 US 202418947135
(71) Applicant: NXP B.V., 5656 AG Eindhoven (NL)
(72) Inventor: Frisson, Jo, 5656AG Eindhoven (NL); Coninx, Jeroen, 5656AG Eindhoven (NL)
(74) Representative: Miles, John Richard

(57) **Abstract**

Systems and techniques for implementing an energy-efficient multiplier-accumulator include generating signs for products of multiplications based on corresponding sets of multiplicands and multipliers, and producing an offset value based on a number of negative signs in the generated signs. Bitwise inversion is selectively performed on each product of the multiplications based on the generated signs and, after performing the selective bitwise inversion, each product produced by the multiplications is summed. The offset value is added to a final result of the summing based on a number of negative signs in the generated signs. One or more of the multiplicands and the multipliers are converted to a signed magnitude representation prior to the multiplications.

## Description

### BACKGROUND

The present disclosure relates generally to digital signal processing, vector processing, and matrix processing, and particularly to energy-efficient multiplier-accumulators. Multiplier-accumulator circuits are utilized in digital signal processing, vector processing, and matrix processing in order to perform a number of different operations, such as arithmetic logic, signal filtering, convolution, and Fourier transforms, to enable various functionality in fields such as machine learning, audio and graphics processing, control systems, high-performance computing, cryptography, and embedded systems, among others. Generally, a multiplier-accumulator is a hardware or software component that multiplies sets of numbers and provides an output representing the sum of the results of the multiplication.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of an energy-efficient multiplier-accumulator in accordance with some embodiments.
FIG. 2 is a block diagram illustrating an example of using an energy-efficient multiplier-accumulator such as that of FIG. 1 in accordance with some embodiments.
FIG. 3 is a flow diagram of a method of enabling energy-efficient multiplication-accumulation in accordance with some embodiments.

### DETAILED DESCRIPTION

When performing a convolution function, a multiplier-accumulator multiplies elements from two sets of data (e.g., a data signal and a set of coefficients associated with a particular filter) and then sums the results. Typically, a sliding window or frame of reference delimits sequential portions of the data signal and, at each position of the sliding window, the values of the data signal in the sliding window are multiplied by a set of coefficients associated with a particular filter, such as a finite impulse response (FIR) filter. After multiplying each pair of corresponding elements, the multiplier-accumulator adds each of the products of the multiplications together to produce a single summed result associated with a current position of the sliding window. This process is repeated as the sliding window is applied to sequential portions of the input data, and a new result is produced at each position. However, the operation of multiplier-accumulators often consumes significant amounts of power, which limits the compactness and battery life of devices that incorporate such software and/or circuitry. In order to provide an energy-efficient multiplier-accumulator, the energy dissipated by conventional multiplier-accumulators needs to be limited by optimizing aspects of multiplier-accumulators that consume the most power. Various techniques for providing such optimizations are disclosed hereinbelow.

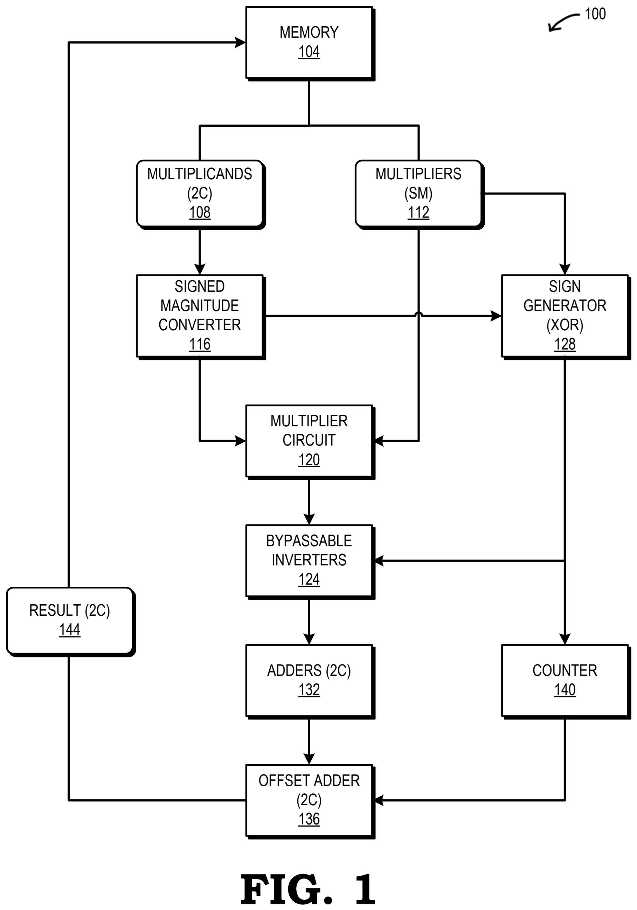

FIGS. 1-3 illustrate systems and techniques for implementing an energy-efficient multiplier-accumulator. In some embodiments, one or more sets of values to be multiplied are first converted to a signed magnitude (SM) representation, where, in most implementations, a first bit represents a sign of the value (e.g., "0" for positive and "1" for negative) and subsequent bits represent a magnitude. By converting the sets of values to an SM representation, in some implementations, an amount of bit toggling (explained in more detail below) that is required to provide sets of values to the multiplier component(s) of the multiplier-accumulator is minimized, thus reducing the overall power dissipation of the multiplier-accumulator. Coefficients associated with particular filters, such as particular types of finite impulse response (FIR) filters, are often stored in a representation or format referred to as "two's complement" (2C) when the coefficients are negative. 2C representations provide various advantages over SM and unsigned binary representations. For example, among other benefits, using 2C representations allows both positive and negative numbers to be added and subtracted using the same binary addition circuitry without needing additional circuitry to handle negative numbers.

In order to produce a negative 2C representation of an unsigned binary value, the value to be converted is subtracted from a power of two, and particularly from 2ⁿ, where n is the number of bits in the unsigned binary value (hence the name "two's complement," which refers to subtracting a number from a power of two). This subtraction is often done indirectly, by bitwise inverting the unsigned binary value (e.g., "N"), which results in a value of 2ⁿ - 1 - N, and then incrementing the result to produce a value of 2ⁿ - N. For example, to convert an unsigned binary value of 0010, representing the decimal number 2, to a negative 2C representation, a bitwise inversion is performed, resulting in a value of 1101, and then that value is incremented, producing a value of 1110, which represents the number -2 in 2C. This can be confirmed by repeating the process; inverting the bits of 1110 results in a value of 0001 and incrementing that value results in an unsigned binary value of 0010 (representing the decimal number 2). One benefit of using 2C, as noted above, is that the same circuitry can be used to add positive and negative numbers. For example, adding the 2C value 1110 (representing the decimal number -2) to itself produces the 2C value 11111100 (representing the decimal number - 4), while adding 1110 (representing the decimal number -2) to 0010 (representing the decimal number 2) results in the 2C value 0000 (representing the decimal number 0).

However, coefficients or other values that are processed by multiplier-accumulators are often centered around zero, such as filter coefficients that exhibit a Gaussian distribution (e.g., a bell curve). As the filter coefficients are often stored in a 2C representation, when a coefficient value such as decimal -1 (11111111 in 2C) is provided to a multiplier in a multiplier-accumulator and a coefficient value of decimal +1 (00000001 in 2C) is required for a subsequent multiplication, seven of the eight bits in the 2C representation of -1 need to be toggled (i.e., inverted) to produce the 2C representation of +1 at the input to the multiplier. This toggling can result in significant power usage when the filter coefficients are centered around or offset from but include zero. In order to reduce the amount of bit toggling required in such an implementation, and thus increase the energy efficiency of the multiplier-accumulator, in some embodiments, the 2C representations of the coefficients are converted to SM representations. For example, decimal -1 in SM is 10000001, while decimal +1 in SM is 00000001. Thus, when an SM value of decimal -1 needs to be changed to decimal +1 at the input to a multiplier in a multiplier-accumulator, only a single bit needs to be toggled, which requires significantly less energy than toggling seven of the eight bits, as would be required using 2C representations. This energy savings is compounded as hundreds or thousands of calculations are often performed by multiplier-accumulators in the process of implementing various functions or performing various calculations. Similar energy-saving benefits can be realized when multiplying sets of values that are not centered around or offset from but including zero by shifting the values to center around zero. Such a shift can then be corrected after the multiplier-accumulator performs its function by compensating for the shift.

To produce an SM representation from a 2C representation, any negative numbers are converted to positive numbers (e.g., decimal -1 (11111111 in 2C) is converted to decimal +1 (00000001) by bitwise inverting the 2C representation and then incrementing the result) and then the first bit is inverted to signify that the value is negative (e.g., 10000001). Positive numbers in 2C representation do not require any conversion as they are identical to their SM representations. Although converting negative 2C representations to SM representations can require nontrivial power usage, sets of values such as coefficients associated with particular filters implemented with multiplier-accumulators are often pre-determined and static, and so these values can be pre-converted to SM representations (e.g., "offline," by a compiler or prior to or in connection with manufacturing a device implementing such filters) and stored in a memory. By providing SM representations for values associated with, e.g., coefficients of common filters, in a memory, further power savings can be realized when the values would otherwise have a 2C representation and require conversion to an SM representation.

Typically, as noted above, in order to convert unsigned binary representations to 2C representations, a bitwise toggle is performed on the SM representation and the result is incremented. However, in multiplier-accumulators, numerous additions are often required to be performed, as a multiplier circuit in a multiplier-accumulator may include 16, 32, 64, or more individual multipliers, where each product of each multiplier must then be added to each other product of each other multiplier. Thus, when unsigned binary values are multiplied, as described further hereinbelow, any product that should represent a negative value should be bitwise inverted and incremented in order to produce a 2C representation that can then be efficiently added, as described above, to other products of other multipliers. However, incrementing every value produced by a multiplier can require 16, 32, 64, or more individual additions when each product of each multiplier is converted to a 2C representation.

As described further hereinbelow, in order to further increase the energy efficiency of a multiplier-accumulator, rather than performing individual additions to each product of each multiplier when converting the products to a 2C representation, a number of negative values in the multiplicands and multipliers to be multiplied are analyzed to identify correct signs (e.g., positive or negative) for the products of the multipliers and the number of negative products are counted or enumerated. An offset corresponding to the number of negative values is then added to a final result of the numerous adders in the multiplier-accumulator that sum the values of the multipliers. Thus, in some embodiments, a single addition is performed after summing the products of the multipliers to correct the "offset" produced by only bitwise inverting and not incrementing each negative result of the multipliers in the multiplier-accumulator, which further limits the power dissipation of the multiplier-accumulator.

Determining correct signs for the products of the multipliers based on the signs of the multiplicands and multipliers also enables unsigned binary representations to be provided to the multipliers, simplifying and increasing the efficiency of the multipliers. In some embodiments, sets of bypassable inverters are provided at the outputs of the multipliers such that when a negative value should be produced, as identified based on the signs of corresponding multiplicands and multipliers, corresponding ones of the bypassable inverters are enabled to perform bitwise inversion of the products. As noted above, this produces an offset when the values are not incremented after being bitwise inverted, which is corrected with a single addition based on the enumerated number of negative products, as also noted above. Accordingly, various aspects of the present disclosure can be used, separately or in combination, to produce energy-efficient multiplier-accumulators.

FIG. 1 is a block diagram of an energy-efficient multiplier-accumulator 100 in accordance with some embodiments. As shown in FIG. 1, the multiplier-accumulator 100 includes a memory 104, which stores multiplicands 108 and multipliers 112 to be multiplied and accumulated by the multiplier-accumulator. In some embodiments, the multiplicands 108 represent a data stream, such as an audio or video data stream, while the multipliers 112 represent coefficients of a filter to be implemented using the multiplier-accumulator 100. Notably, in some embodiments, one or more of the multiplicands 108 and the multipliers 112 are provided by or stored in a register, provided by a streaming input, or otherwise provided rather than or in addition to being stored in the memory 104.

In the example of FIG. 1, the multiplicands 108 are stored in a 2C representation while the multipliers 112 are stored in an SM representation. As noted above, providing the multipliers 112 (i.e., the coefficients of the filter, which are often static) in an SM representation in memory (e.g., pre-converted "offline" from a 2C representation) enables the multiplier-accumulator 100 to avoid having to convert the multipliers 112 to an SM representation, which provides substantial power savings and can increase throughput performance of the multiplier-accumulator 100. However, in some implementations, the multipliers 112 are stored in a 2C representation and converted to an SM representation by the multiplier-accumulator 100. In some embodiments, the multiplicands 108 are also stored in the memory 104 in an SM representation. However, as data is often stored in a 2C representation in modem computing and is often random or unpredictable (e.g., in a stream of audio or video), the multiplicands 108 are stored in a 2C representation in the memory 104 in the example of FIG. 1.

In some embodiments, the multiplicands 108, as discussed above, are stored in a 2C representation in the memory 104, and thus an SM converter 116 is provided in the multiplier-accumulator 100 to convert the multiplicands 108 to an SM representation. The SM converter 116 may be implemented in hardware or software. As noted above, in some embodiments, the multipliers 112 are also provided to an SM converter, e.g., when they are stored in the memory 104 in a 2C representation. The converted multiplicands 108 and the multipliers 112 are then provided to a multiplier circuit 120 in a truncated signed magnitude representation that omits a sign bit of the signed magnitude representation, i.e., in an unsigned binary representation. Notably, in some embodiments, the multiplier circuit 120 is implemented in software rather than hardware.

The multiplier circuit 120 includes a set of multipliers configured to multiply corresponding sets of the multiplicands 108 and the multipliers 112. However, as unsigned binary representations of the multiplicands 108 and multipliers 112 are provided to the multiplier circuit 120, each of the products produced by the multiplier circuit 120 that should have a negative value will instead have a positive value. To correct for this, a set of bypassable inverters 124 is provided at the output of the multiplier circuit 120, which selectively perform bitwise inversion on each product produced by the multiplier circuit based on the signs generated by a sign generator 128. The sign generator 128 can be implemented in hardware or software, and, as shown in the example of FIG. 1, in some embodiments, the sign generator 128 is implemented as one or more exclusive-or (XOR) circuits.

In some embodiments, the sign bit of each corresponding set of the multiplicands 108 and the multipliers 112 is provided to the sign generator 128. If both signs of a corresponding set of multiplicands 108 and multipliers 112 are positive, the result of multiplying that set should be positive, and if both signs are negative, the result of multiplying that set should also be positive. Accordingly, only when one of a corresponding set of multiplicands 108 and multipliers 112 is positive and the other is negative should the result of multiplying that set be negative. Thus, an XOR circuit, which only outputs or evaluates to "true" or "1" when the number of positive inputs is odd and otherwise outputs "false" or "0," is suitable for determining a sign of a product of a corresponding set of multiplicands 108 and multipliers 112, as a sign bit of 1 (representing a negative value in a SM or 2C representation) and a sign bit of 0 (representing a positive value in a SM representation) will produce an output of "true" or "1" when provided to the XOR circuit. Thus, whether using an XOR circuit, another type of circuit, or software, the sign generator 128 generates a sign for each product of the multiplier circuit based on each corresponding set of multiplicands 108 and multipliers 112, and in particular based on the number of positive and negative sign bits of each corresponding set of multiplicands 108 and multipliers 112.

The outputs of the sign generator 128 are provided to the bypassable inverters 124, which, as noted above, selectively perform bitwise inversion on each product produced by the multiplier circuit based on the signs generated by a sign generator 128. The bypassable inverters 124 may be implemented in hardware or software. For example, if an output of one of the multipliers is 00000001 but is identified by the sign generator 128, based on the signs of the multiplicands 108 and the multipliers 112, as representing a negative number, the bypassable inverter 124 associated with that output is activated such that the value at the output of the associated bypassable inverter 124 is 11111110. Although in some embodiments this value may be incremented at this time, in some embodiments, this incrementation is not performed, resulting in the decimal value "-1" (11111111 in 2C) being misrepresented as the decimal value "-2" (11111110 in 2C). A set of one or more adders 132, which may be implemented in hardware or software, in the multiplier-accumulator 100 add all of the outputs of the bypassable inverters 124, including the misrepresented values that are each offset from their correct values by -1, and the final value of the adders 132 is provided to an offset adder 136, which also may be implemented in hardware or software.

In order to correct the cumulative error produced due to the misrepresentations of any negative numbers produced by the bypassable inverters 124, a counter 140, which may be implemented in hardware or software, adds up or enumerates a total number of negative signs produced by the sign generator 128 for a particular set of the multiplicands 108 and the multipliers 112 that have been multiplied by the multiplier circuit 120 in a current iteration. The counter 140 provides the total number of negative signs produced by the sign generator 128 in the current iteration to the offset adder 136, which adds that number to the output of the adders 132, thus correcting the cumulative error produced due to the misrepresentations of any negative numbers produced by the bypassable inverters 124. As noted above, performing this single addition after the outputs from the bypassable inverters 124 are summed precludes the multiplier-accumulator 100 from having to increment each individual negative output produced by the bypassable inverters 124, resulting in significant power savings and increased throughput performance. The output result 144 produced by the offset adder 136, which is the correct result of performing multiplication-accumulation on the sets of multiplicands 108 and multipliers 112 in a current iteration, is then stored in the memory 104. Subsequently, e.g., after shifting a sliding window of a filter or otherwise producing, retrieving, or receiving new multiplicands 108 and/or multipliers 112, the process outlined in FIG. 1 is repeated, as necessary, in order to implement, e.g., a desired filter or calculation.

Notably, in some embodiments, one or more of the multiplicands 108 and the multipliers 112 may include a value of 10000000 in 2C representation (corresponding to a decimal value of -128). Converting 10000000 to an 8-bit SM representation is not possible, however, as -128 requires nine bits to be represented in SM (i.e., 110000000). In some embodiments, any 2C representations in the multiplicands 108 and the multipliers 112 are modified to -127 (11111111 in SM) to account for this, although this will produce minor errors in the outputs of the multiplier-accumulator 100. In other embodiments, a separate pathway (e.g., separate sign generators, multipliers, inverters, adders, and/or offset adders) is provided in software or hardware to account for the presence of any decimal -128 (10000000 in 2C) values in the multiplicands 108 and the multipliers 112, such that the output of the multiplier-accumulator 100 will not produce any errors. In some implementations, this separate pathway may take advantage of the fact that decimal "-0" (10000000 in 2C) is equal to decimal "0" (00000000 in 2C), enabling "-0" to be interpreted as -128. However, providing such a separate pathway may increase energy usage and, when implemented in hardware, may require additional circuitry and thus more silicon area to implement the multiplier-accumulator 100.

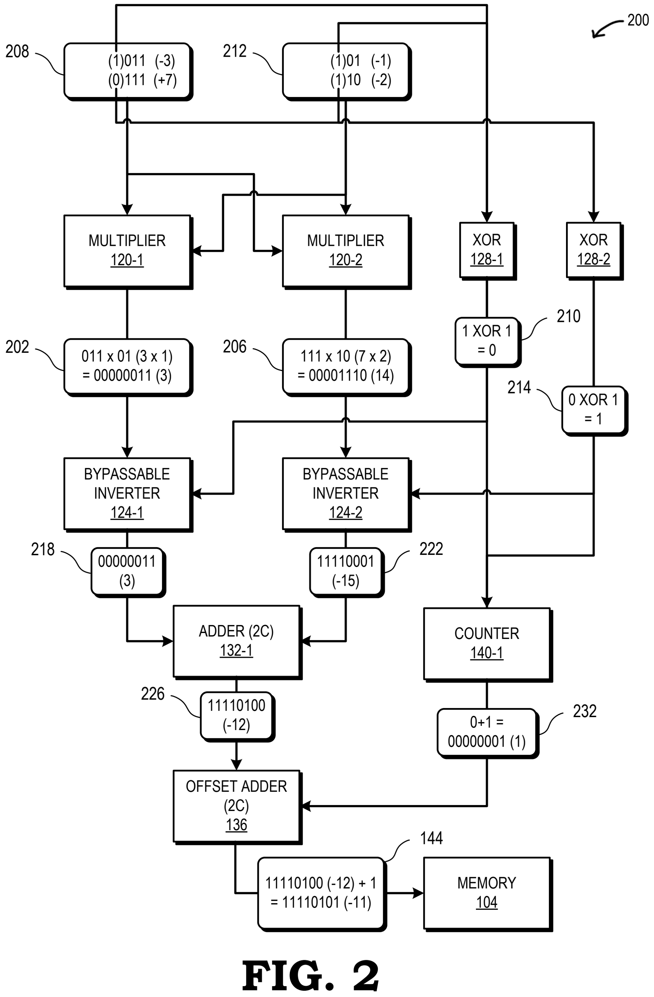

FIG. 2 is a block diagram illustrating an example 200 of using an energy-efficient multiplier-accumulator such as the multiplier-accumulator 100 of FIG. 1 in accordance with some embodiments. As shown in FIG. 2, two sets of multiplicands 208 and multipliers 212 in SM representations are provided, i.e., 1011 (-3 decimal) and 101 (-1 decimal) as a first set, and 0111 (+7 decimal) and 110 (-2 decimal) as a second set. Although the multiplicands 208 in this example 200 are 4-bit and the multipliers 212 are 3-bit, it will be understood that any number of bits can be used for the multiplicands 208 and multipliers 212. Additionally, although only two sets of multiplicands 208 and multipliers 212 are illustrated in the example 200 of FIG. 2, with two corresponding multipliers 120-1 and 120-2, two bypassable inverters 124-1 and 124-2, two XORs 128-1 and 128-2, and a single adder 132-1, it will be understood that any number of sets of multiplicands 208 and multipliers 212 can be processed simultaneously or concurrently by the multiplier-accumulator 100 of FIG. 1 provided that the number of multipliers 120, bypassable inverters 124, sign generators 128, and adders 132 in the multiplier-accumulator are sufficient to perform such processing.

In the example 200 of FIG. 2, the first set (-3 and -1) of multiplicands 208 and multipliers 212 are provided to a first multiplier 120-1 and the second set (+7 and -2) of multiplicands 208 and multipliers 212 are provided to a second multiplier 120-2 in unsigned binary representations (i.e., 011, representing +3, and 01, representing +1, for the first set; and 111, representing +7, and 10, representing +2, for the second set). Multiplication of the first set (3 x 1) produces the first multiplication result 202 as +3 decimal (00000011, unsigned), and multiplication of the second set (7 x 2) produces the second multiplication result 206 as +14 (00001110, unsigned). Concurrently with the multiplications performed by the multipliers 120, the sign bits of the sets of the multiplicands 208 and multipliers 212 are provided to XOR circuits 128-1 and 128-2.

In particular the sign bits of the first set of multiplicands 208 and multipliers 212 (i.e., 1 and 1) are provided to the first XOR circuit 128-1, while the sign bits of the second set of multiplicands 208 and multipliers 212 (i.e., 0 and 1) are provided to the second XOR circuit 128-2. The first XOR circuit 128-1 produces a first XOR output 210 of 0 while the second XOR circuit 128-2 produces a second XOR output 214 of 1, indicating that the sign of the product output by the second multiplier 120-2 should be negative. The first XOR output 210 is then provided to a first bypassable inverter 124-1 and the second XOR output 214 is then provided to a second bypassable inverter 124-2, and both the first XOR output 210 and the second XOR output 214 are provided to a counter 140-1.

Because the first XOR output 210 is 0, the first bypassable inverter 124-1 is bypassed and produces a first bypassable inverter output 218 identical to the first multiplication result 202 (00000011 in 2C representing +3 in decimal). However, as the second XOR output 214 is 1, the second bypassable inverter 124-2 is activated or not bypassed and, as such, bitwise inverts the second multiplication result 206 to produce a second bypassable inverter output 222 (11110001 in 2C representing -15 in decimal). The first bypassable inverter output 218 and the second bypassable inverter output 222 are provided to an adder 132-1, which produces a final adder output 226 (11110111 in 2C representing -12 in decimal).

As the first XOR output 210 and the second XOR output 214 were provided to the counter 140-1, the counter 140-1 adds the first XOR output 210 (0) and the second XOR output 214 (1) to produce a counter output 232 (00000001 in 2C representing +1 in decimal), which the counter 140-1 provides to the offset adder 136. The offset adder 136 then adds the counter output 232 to final adder output 226 to produce the output result 144 (11110101 in 2C representing -11 in decimal) of a current iteration of the multiplier-accumulator 100, which correctly represents the multiplication and accumulation of the sets of multiplicands 208 and multipliers 212 provided in the example 200, i.e., (-3 x -1) + (7 x -2) = (3 - 14) = -11. The output result 144 of the current iteration is then stored in memory 104, after which one or more new sets of multiplicands 208 and/or multipliers 212 may be produced, retrieved, received, and/or stored as one or more new multiplicands 208 and multipliers 212 for another iteration of the multiplier-accumulator 100, as necessary, in order to implement, e.g., a desired filter or calculation.

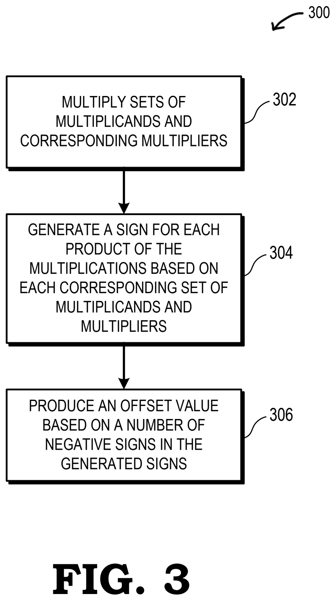

FIG. 3 is a flow diagram of a method 300 of enabling energy-efficient multiplication-accumulation in accordance with some embodiments, which may be implemented by the multiplier-accumulator 100 of FIG. 1. As shown in FIG. 3, at block 302 of the method 300, the multiplier-accumulator 100, and for example the multiplier circuit 120 of the multiplier-accumulator 100, multiplies corresponding sets of multiplicands and corresponding multipliers, such as corresponding sets of multiplicands 108 and multipliers 112. At block 304, the multiplier-accumulator 100, and for example the sign generator 128 of the multiplier-accumulator 100, generates a sign for each product of the multiplications based on each corresponding set of multiplicands and multipliers. At block 306, the multiplier-accumulator 100, and for example the counter 140 of the multiplier-accumulator 100, produces an offset value based on a number of negative signs in the signs generated by the sign generator. In some embodiments, the method 300 includes further aspects, as described in detail hereinabove with reference to FIGS. 1 and 2. For example, in some embodiments, the method 300 further includes selectively performing bitwise inversion on each product produced by the multiplying based on the generated signs. In some embodiments, after performing the selective bitwise inversion, the method 300 further includes summing each product produced by the multiplying. In some embodiments, the method 300 further includes adding the offset value to a final result of the summing based on a number of negative signs in the generated signs. In some embodiments, the method 300 further includes performing the bitwise inversion on each product produced by the multiplying for which a negative sign is generated. In some embodiments, the method 300 further includes converting one or more of the multiplicands and the multipliers to a signed magnitude representation prior to the multiplying. In some embodiments, the method 300 further includes providing the one or more of the multiplicands and the multipliers in a 2C representation for the converting. In some embodiments, the method 300 further includes providing the multiplicands and multipliers for the multiplying in an unsigned binary representation. In some embodiments, the sign generator 128 produces a sign for each product of the multiplying based on sign bits of each corresponding set of multiplicands and multipliers.

In some embodiments, certain aspects of the techniques described above, such as one or more aspects of the multiplier-accumulator 100 of FIG. 1 and/or one or more aspects of the method 300 of FIG. 3, are implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

Systems and techniques for implementing an energy-efficient multiplier-accumulator include generating signs for products of multiplications based on corresponding sets of multiplicands and multipliers, and producing an offset value based on a number of negative signs in the generated signs. Bitwise inversion is selectively performed on each product of the multiplications based on the generated signs and, after performing the selective bitwise inversion, each product produced by the multiplications is summed. The offset value is added to a final result of the summing based on a number of negative signs in the generated signs. One or more of the multiplicands and the multipliers are converted to a signed magnitude representation prior to the multiplications.

Aspects of the disclosure are defined in the accompanying claims. In a first aspect, there is provided a device, comprising: a multiplier circuit configured to multiply sets of multiplicands and multipliers; a sign generator configured to generate a sign for each product of the multiplier circuit based on each corresponding set of multiplicands and multipliers; and a counter configured to produce an offset value based on a number of negative signs generated by the sign generator.

In some embodiments, the device further comprises: a set of bypassable inverters configured to selectively perform bitwise inversion on each product produced by the multiplier circuit based on the signs generated by the sign generator; and a set of adders configured to sum values output by the bypassable inverters. In some embodiments, the device further comprises: an offset adder configured to add the offset value to a final result of the adders. In some embodiments, bypassable inverters are configured to perform bitwise inversion on each product produced by the multiplier circuit for which the sign generator produces a negative sign. In some embodiments, the device further comprises: a signed magnitude converter configured to convert one or more of the multiplicands and the multipliers to a signed magnitude representation prior to the multiplying. In some embodiments, the one or more of the multiplicands and the multipliers are provided in a two's complement representation to the signed magnitude converter. In some embodiments, the multiplicands and multipliers are provided to the multiplier circuit in an unsigned binary representation. In some embodiments, the sign generator generates a sign for each product of the multiplier circuit based on sign bits of each corresponding set of multiplicands and multipliers.

In a second aspect, there is defined a method comprising: multiplying, by way of a multiplier circuit, sets of multiplicands and corresponding multipliers; generating, by way of a sign generator circuit, a sign for each product of the multiplications based on each corresponding set of multiplicands and multipliers; and producing an offset value based on a number of negative signs in the generated signs.

In some embodiments, the method further comprises: selectively performing bitwise inversion on each product produced by the multiplying based on the generated signs; and after performing the selective bitwise inversion, summing each product produced by the multiplying. In some embodiments, the method further comprises: adding the offset value to a final result of the summing based on a number of negative signs in the generated signs. In some embodiments, the method further comprises: performing the bitwise inversion on each product produced by the multiplying for which a negative sign is generated. In some embodiments, the method further comprises: converting one or more of the multiplicands and the multipliers to a signed magnitude representation prior to the multiplying. In some embodiments, the method further comprises: providing the one or more of the multiplicands and the multipliers in a two's complement representation for the converting. In some embodiments, the method further comprises: providing the multiplicands and multipliers for the multiplying in an unsigned binary representation. In some embodiments, the generating produces a sign for each product of the multiplying based on sign bits of each corresponding set of multiplicands and multipliers.

In a third aspect, there is provided a non-transitory computer readable medium embodying a set of executable instructions, the set of executable instructions to manipulate at least one processor to: multiply sets of multiplicands and corresponding multipliers; generate a sign for each product of the multiplications based on each corresponding set of multiplicands and multipliers; and produce an offset value based on a number of negative signs in the generated signs.

In some embodiments, the computer readable medium further comprises instructions to: selectively perform bitwise inversion on each product produced by the multiplying based on the generated signs; and after the selective bitwise inversion, sum each product produced by the multiplying. In some embodiments, the computer readable medium further comprises instructions to add the offset value to a final result of the summing based on a number of negative signs in the generated signs. In some embodiments, the computer readable medium further comprises instructions to convert one or more of the multiplicands and the multipliers to a signed magnitude representation prior to the multiplying.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A device, comprising:
a multiplier circuit configured to multiply sets of multiplicands and multipliers;
a sign generator configured to generate a sign for each product of the multiplier circuit based on each corresponding set of multiplicands and multipliers; and
a counter configured to produce an offset value based on a number of negative signs generated by the sign generator.

2. The device of claim 1, further comprising:
a set of bypassable inverters configured to selectively perform bitwise inversion on each product produced by the multiplier circuit based on the signs generated by the sign generator; and
a set of adders configured to sum values output by the bypassable inverters.

3. The device of claim 2, further comprising an offset adder configured to add the offset value to a final result of the adders.

4. The device of claim 2 or 3, wherein the bypassable inverters are configured to perform bitwise inversion on each product produced by the multiplier circuit for which the sign generator produces a negative sign.

5. The device of any preceding claim, further comprising a signed magnitude converter configured to convert one or more of the multiplicands and the multipliers to a signed magnitude representation prior to the multiplying.

6. The device of claim 5, wherein the one or more of the multiplicands and the multipliers are provided in a two's complement representation to the signed magnitude converter.

7. The device of claim 6 or 7, wherein the multiplicands and multipliers are provided to the multiplier circuit in an unsigned binary representation.

8. The device of any preceding claim, wherein the sign generator generates a sign for each product of the multiplier circuit based on sign bits of each corresponding set of multiplicands and multipliers.

9. A method comprising:
multiplying, by way of a multiplier circuit, sets of multiplicands and corresponding multipliers;
generating, by way of a sign generator circuit, a sign for each product of the multiplications based on each corresponding set of multiplicands and multipliers; and
producing an offset value based on a number of negative signs in the generated signs.

10. The method of claim 9, further comprising:
selectively performing bitwise inversion on each product produced by the multiplying based on the generated signs; and
after performing the selective bitwise inversion, summing each product produced by the multiplying.

11. The method of claim 10, further comprising adding the offset value to a final result of the summing based on a number of negative signs in the generated signs.

12. The method of claim 10 or 11, further comprising performing the bitwise inversion on each product produced by the multiplying for which a negative sign is generated.

13. The method of any of claims 9 to 12, further comprising converting one or more of the multiplicands and the multipliers to a signed magnitude representation prior to the multiplying.

14. The method of claim 13, further comprising providing the one or more of the multiplicands and the multipliers in a two's complement representation for the converting.

15. The method of claim 14, further comprising providing the multiplicands and multipliers for the multiplying in an unsigned binary representation.
